# EUROPEAN PATENT SPECIFICATION

(11) **EP 3 072 046 B1**
(45) Date of publication and mention of the grant of the patent: **17.07.2019**
(21) Application number: 14864196.2
(22) Date of filing: 22.09.2014
(51) Int. Cl.: G06F 9/44, G05B 23/02, G06Q 10/00, G07C 5/00, G07C 5/08

(54) **LATENCY TOLERANT FAULT ISOLATION**
LATENZTOLERANTE FEHLERISOLIERUNG
LOCALISATION DE DÉFAILLANCES TOLÉRANT UNE LATENCE

(30) Priority: 22.11.2013 US 201314087214
(43) Date of publication of application: 28.09.2016
(73) Proprietor: Sikorsky Aircraft Corporation, Stratford, CT 06615-9129 (US)
(72) Inventor: MAGSON, James S., Hamden, CT 06517 (US)
(74) Representative: Schmitt-Nilson Schraud Waibel Wohlfrom Patentanwälte Partnerschaft mbB
(86) International application number: PCT/US2014/056710
(87) International publication number: WO 2015/076921

(56) References cited:
- US-A1- 2008 195 572
- US-A1- 2008 195 572
- US-A1- 2009 181 665
- US-A1- 2009 181 665
- US-A1- 2009 192 659
- US-A1- 2010 306 001
- US-A1- 2011 251 739
- US-A1- 2012 101 793
- US-A1- 2013 274 991
- US-A1- 2013 274 991

## Description

### BACKGROUND OF THE INVENTION

The subject matter disclosed herein relates to maintenance data systems, and in particular to latency tolerant fault isolation in a maintenance data system.

Real-time health or maintenance monitoring in a complex system can involve monitoring thousands of inputs as evidence of a potential fault or maintenance issue. A complex system can involve many subsystems which may have individual failure modes and cross-subsystem failure modes. Simple fault identification provided by built-in tests can be helpful in identifying localized issues but may also represent symptoms of larger-scale issues that involve other subsystems or components. For example, detecting a temperature fault in a hydraulic line could result from a sensor error, an electrical connector issue, a hydraulic fluid leak, environmental factors, an actuator fault, or other factors. Isolating and identifying the most likely source of a fault and associated maintenance actions to address the fault can be challenging in a complex system, particularly when performed as a real-time process.

### BRIEF DESCRIPTION OF THE INVENTION

According to one aspect of the invention, a method of latency tolerant fault isolation is provided. The method includes receiving, by a maintenance data computer, evidence associated with a test failure. The maintenance data computer accesses metadata to identify a system failure mode associated with the evidence and other potential evidence associated with the system failure mode. The maintenance data computer determines a maximum predicted latency to receive the potential evidence associated with the system failure mode based on the metadata. The method also includes waiting up to the maximum predicted latency to determine whether one or more instances of the potential evidence associated with the system failure mode are received as additional evidence. The maintenance data computer diagnoses the system failure mode as a fault based on the evidence and the additional evidence.

US 2013/274991 (A1) discloses a method, system and a program for computer-aided analysis of the failure tolerance of an aircraft system, using critical event charts. The system comprises a plurality of subsystems at least one of which comprises a monitoring unit and notification of a detected event, using critical event charts. After selecting at least one receivable notification message represented by a node of the critical event chart, elements of the minimal diagnostic set capable of resulting in the generation of the at least one selected notification message are identified, the identified elements forming part of the failure tolerance report.

The present invention relates to a method, system and a computer-readable medium for latency tolerant fault isolation in accordance with the claims.

According to another aspect of the invention, a system for latency tolerant fault isolation is provided. The system includes a plurality of monitored subsystems and a maintenance data computer coupled to the monitored subsystems. The maintenance data computer includes a processing circuit configured to receive evidence associated with a test failure. Metadata is accessed to identify a system failure mode associated with the evidence and other potential evidence associated with the system failure mode. A maximum predicted latency to receive the potential evidence associated with the system failure mode based on the metadata is determined. The processing circuit is further configured to wait up to the maximum predicted latency to determine whether one or more instances of the potential evidence associated with the system failure mode are received as additional evidence. The system failure mode is diagnosed as a fault based on the evidence and the additional evidence.

Another aspect includes a non-transitory computer-readable medium, having stored thereon program code which, when executed, controls a maintenance data computer to perform a method. The method includes receiving evidence associated with a test failure. The maintenance data computer accesses metadata to identify a system failure mode associated with the evidence and other potential evidence associated with the system failure mode. The maintenance data computer determines a maximum predicted latency to receive the potential evidence associated with the system failure mode based on the metadata. The method also includes waiting up to the maximum predicted latency to determine whether one or more instances of the potential evidence associated with the system failure mode are received as additional evidence. The maintenance data computer diagnoses the system failure mode as a fault based on the evidence and the additional evidence.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 illustrates a vehicle-based maintenance data system according to an embodiment of the invention;
FIG. 2 illustrates a block diagram of a maintenance data computer according to an embodiment of the invention;
FIG. 3 is a graphical depiction of a bigraph dependency model for evidence and system failure modes according to an embodiment of the invention; and
FIG. 4 is a flowchart of a method according to an embodiment of the invention.

The detailed description explains embodiments of the invention, together with advantages and features, by way of example with reference to the drawings.

### DETAILED DESCRIPTION OF THE INVENTION

In exemplary embodiments, a dependency model bigraph metadata model is used to identify relationships between evidence provided by monitored subsystems and potential system failure modes. The evidence may be provided by built-in tests which can run over a period of time. In order to diagnose a system failure mode as a fault, multiple pieces of evidence may be needed. Each piece of evidence may not arrive at the same time, as some failures are rapidly detected, while others have greater latency. Rather than simply looking at test results for other related failures upon identifying a failure, embodiments analyze an associated dependency matrix to determine a maximum predicted latency from the failure to additional evidence generation. A weighted bigraph can be traversed to allow all applicable latencies to elapse prior to a failure resolution decision. Once a sufficient period of time has elapsed for all potential evidence to be received, a maintenance decision can be made with a higher likelihood of accuracy. The period of time may be reduced if all evidence is received prior to reaching the maximum predicted latency. Although embodiments herein are described in terms of a vehicle-based maintenance data system, with a specific example of a rotorcraft depicted, it will be understood that embodiments can include any type of maintenance data system.

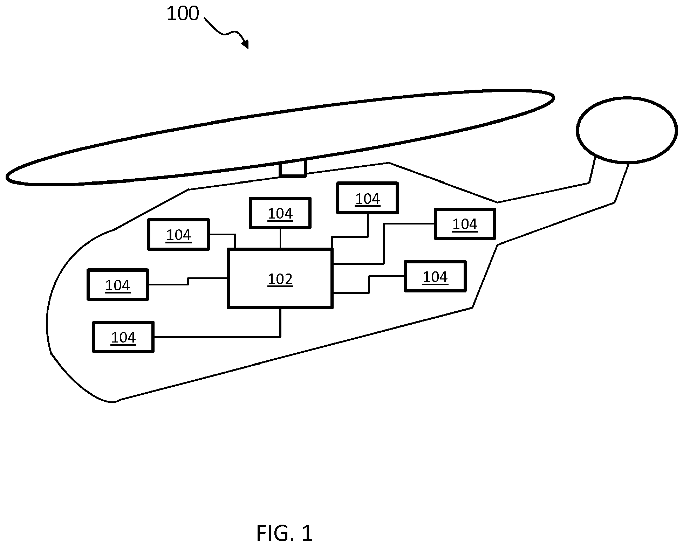

FIG. 1 illustrates a vehicle-based maintenance data system 100 according to an embodiment of the invention. The system 100 may include any type of vehicle, including aircraft, watercraft and land vehicles. In one embodiment, the system 100 is embodied in an aircraft, such as a rotorcraft, an airplane, or other type of aircraft. The system 100 includes a maintenance data computer 102 coupled to a plurality of monitored subsystems 104. Each of the monitored subsystems 104 may perform built-in tests to check the health of associated components using sensed or derived signals (not depicted). The built-in test results are provided to the maintenance data computer 102 to serve as evidence for making fault determinations and maintenance decisions. When embodied as a rotorcraft, the monitored subsystems 104 can include, for example, engines, rotors, landing gears, avionic subsystems, and/or various hydraulic and/or pneumatic subsystems.

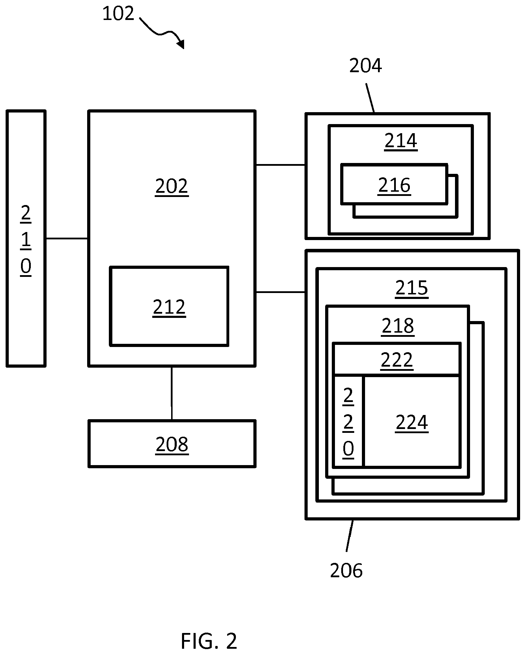

FIG. 2 depicts a block diagram of the maintenance data computer 102 of FIG. 1 in accordance with an exemplary embodiment. The maintenance data computer 102 can include a processing circuit 202 that is interfaced to non-volatile memory 204, volatile memory 206, a timer 208, and a communication interface 210. The maintenance data computer 102 can also include other components and interfaces known in the art, such as one or more power supplies and support circuitry. The processing circuit 202 can be embodied in one or more of a microprocessor, microcontroller, digital signal processor, gate array, logic device, or other circuitry known in the art. The non-volatile memory 204 can be any type of memory that retains its state through cycling of power, such as flash memory, read-only memory, electrically erasable programmable read-only memory, and the like. The volatile memory 206 can be any type of memory that need not retain its state through cycling of power, such as static, dynamic, or phase-change random-access memory. The timer 208 provides a time base for monitoring elapsed time for comparison with a maximum predicted latency for receiving additional evidence associated with a system failure mode. The communication interface 210 is configured to receive built-in test results and other information from the monitored subsystems 104 of FIG. 1 as evidence for fault determination. Although depicted separately, the non-volatile memory 204, volatile memory 206, timer 208, and communication interface 210 can be integrated with the processing circuit 202 or further subdivided and/or grouped in embodiments.

The processing circuit 202 is configured to execute program code 212 that performs a method of latency tolerant fault isolation. The program code 212 may be stored on the non-volatile memory 204 as a non-transitory computer-readable medium and executed directly from the non-volatile memory 204 or copied to the volatile memory 206 and/or to the processing circuit 202 for execution by the processing circuit 202. The processing circuit 202 executes the program code 212 that performs the functionality as previous described and further described herein.

The non-volatile memory 204 may hold metadata 214 that includes one or more sparse matrices 216 for a dependency model bigraph metadata model which relates evidence to potential system failure modes. The one or more sparse matrices 216 can be partitioned to separate data of the monitored subsystems 104 of FIG. 1 that are unrelated. Upon initialization, the processing circuit 202 can read and expand the metadata 214 into metadata 215 in the volatile memory 206. In an exemplary embodiment, the processing circuit 202 expands the one or more sparse matrices 216 into one or more full matrices 218 in the volatile memory 206. The one or more full matrices 218 are partitioned to isolate unrelated subsystems of the monitored subsystem 104 of FIG. 1 from each other, where the unrelated subsystems have no common evidence.

The one or more full matrices 218 are each a dependency model bigraph metadata model linking test failures of the monitored subsystems 104 of FIG. 1 as evidence and potential evidence to a system failure mode and potential system failure modes. A predicted latency associated with each of the instances of the potential evidence provides a weighted link to determine a maximum predicted latency. In the example of FIG. 2, rows of evidence 220 and columns of system failure modes 222 are related by maximum predicted latencies 224. When test results are received from the monitored subsystems 104 of FIG. 1, a test failure is identified as evidence from the rows of evidence 220. An associated system failure mode can also be identified from the columns of system failure modes 222, where a non-zero value exists in the maximum predicted latencies 224 at an intersection of the evidence and the system failure mode. Other potential evidence also exists in the rows of evidence 220, and other potential system failure modes exist in the columns of system failure modes 222.

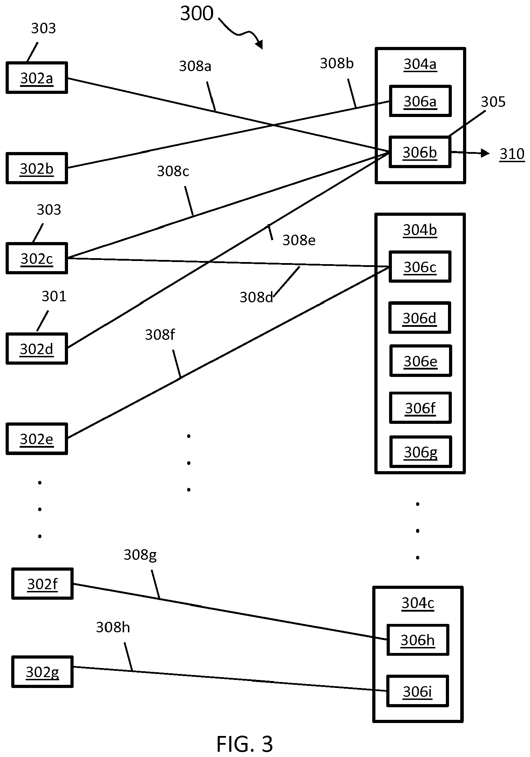

FIG. 3 is a graphical depiction of a bigraph dependency model 300 for evidence and system failure modes according to an embodiment of the invention. In the example of FIG. 3, potential evidence 302a, 302b, 302c, 302d, 302e, 302f, and 302g is linked to potential system failure modes 306a, 306b, 306c, 306d, 306e, 306f, 306g, 306h, and 306i. The potential system failure modes 306a-306i may be grouped or partitioned according to mappings relative to the monitored subsystems 104 of FIG. 1. For example, subsystem failure 304a can include potential system failure modes 306a and 306b; subsystem failure 304b can include potential system failure modes 306c-306g; and subsystem failure 304c can include potential system failure modes 306h and 306i. A number of links are defined as weights or maximum predicted latencies between the potential evidence 302a-302g and the potential system failure modes 306a-306i, such as links 308a, 308b, 308c, 308d, 308e, 308f, 308g, and 308h. Specific values and identifiers for the potential evidence 302a-302g, potential system failure modes 306a-306i, and the links 308a-308h can be defined in the one or more full matrices 218 of FIG. 2 as the rows of evidence 220, columns of system failure modes 222, and maximum predicted latencies 224 respectively.

Certain instances of potential evidence can impact multiple subsystem failure modes. In this example, potential evidence 302c is linked to both potential system failure mode 306b of subsystem failure 304a via link 308c and to the potential system failure mode 306c of subsystem failure 304b via link 308d. Accordingly, the subsystem failures 304a and 304b are related and can be analyzed using one full matrix, while failures and evidence associated with the subsystem failures 304c may be partitioned into a separate matrix of the one or more full matrices 218 of FIG. 2. Any number of subsystem failures, levels of hierarchy in failure and system definition, potential evidence, and potential system failure modes can be supported in embodiments.

If evidence 301 associated with a test failure is received that maps to potential evidence 302d, an association with the potential system failure mode 306b can be determined based on the link 308e by accessing the one or more full matrices 218 in the metadata 215 of FIG. 2 to identify system failure mode 305, where the link 308e may appear as a non-zero value in the maximum predicted latencies 224 of FIG. 2. The system failure mode 305 can serve as a lookup value in the columns of system failure modes 222 of FIG. 2 to identify other potential evidence in the rows of evidence 220 of FIG. 2, where a corresponding non-zero value in the maximum predicted latencies 224 of FIG. 2 can indicate a link. In this example, potential evidence 302a and potential evidence 302c are also identified as being associated with the system failure mode 305 based on links 308a and 308c. The links 308a and 308c are defined as predicted latencies, which can be used to configure timeout counters in coordination with the timer 208 of FIG. 2. The predicted latencies represent a maximum expected amount of delay between associated failures occurring and being identified as evidence. By waiting up to a maximum of the predicted latencies defined in both the links 308a and 308c for instances 303 of the potential evidence 302a and 302c as additional evidence, the probability of correctly diagnosing the system failure mode 305 as a fault 310 improves. This is particularly important where, for example, potential evidence could indicate different system failure modes, such as potential evidence 302c with respect to potential system failure modes 306b and 306c. The system failure mode 305 can be set to any of the potential system failure modes 306a-306i depending upon which of the potential evidence 302a-302g is received as the evidence 301.

Where there is no other potential evidence needed for a system failure mode, the evidence is classified as strong evidence; otherwise, the evidence can be classified as weak evidence. For weak evidence, waiting up to a maximum predicted latency may be needed to determine whether one or more instances of the potential evidence associated with the system failure mode are received as additional evidence before diagnosing the system failure mode as a fault.

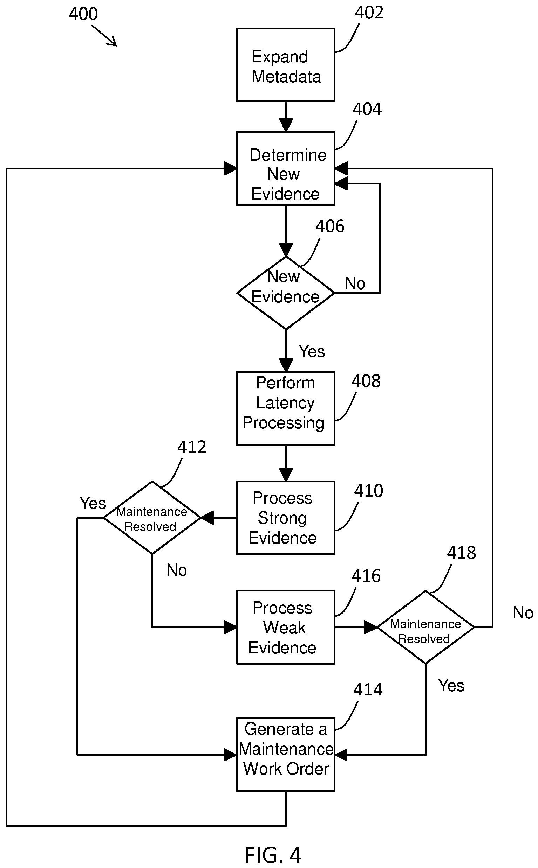

FIG. 4 is a flowchart illustrating a method 400 of latency tolerant fault isolation, according to an embodiment of the invention. The method 400 is described in reference to FIGS. 1-4. At block 402, the processing circuit 202 reads the metadata 214 from non-volatile memory 204. As described in reference to FIG. 2, the metadata 214 may be formatted as one or more sparse matrices 216 in the non-volatile memory 204. Accordingly, the metadata 214 can be read and expanded into the one or more full matrices 218 as metadata 215.

At block 404, the maintenance data computer 102 determines whether new evidence exists. The maintenance data computer 102 can receive evidence 301 associated with a test failure, for example, from one of the monitored subsystems 104. The maintenance data computer 102 accesses the metadata 215 to identify a system failure mode 305 associated with the evidence 301 and other potential evidence associated with the system failure mode 305.

At block 406, if new evidence is not received, then flow returns to block 404; otherwise, latency processing is performed at block 408. The maintenance data computer 102 determines a maximum predicted latency to receive the potential evidence associated with the system failure mode 305 based on the metadata 215. Using the timer 208, the maintenance data computer 102 can wait up to the maximum predicted latency to determine whether one or more instances 303 of the potential evidence associated with the system failure mode 305 are received as additional evidence.

The evidence 301 may be classified as strong evidence based on determining that there is no potential evidence associated with the system failure mode 305 based on the metadata 215. The evidence 301 may be classified as weak evidence based on determining that there is potential evidence associated with the system failure mode 305 based on the metadata 215.

At block 410, strong evidence is processed. Multiple instances of the strong evidence can be processed in parallel as there is no time dependency. At block 412, if there was only strong evidence, then the maintenance action is resolved, and flow proceeds to block 414. At block 414, the system failure mode 305 is diagnosed as a fault 310 by the maintenance data computer 102 based on the evidence 301 and a corresponding maintenance work order is generated. Flow then returns to block 404.

At block 412, if there is weak evidence, then the weak evidence is processed at block 416 after processing any instances of the strong evidence. If the weak evidence can be resolved where all corresponding instances 303 of potential evidence have been received as additional evidence, then the maintenance action is resolved at block 418 and the flow continues to block 414; otherwise, the flow returns to block 404. For weak evidence, the system failure mode 305 can be diagnosed as the fault 310 prior to waiting for the maximum predicted latency upon receiving all of instances 303 of the potential evidence associated with the system failure mode 305.

Technical effects include providing enhanced fault isolation by accounting for variations in latency between identifying evidence and other related instances of potential evidence associated with a system failure mode before declaring a fault. Embodiments of the invention encompass performing latency tolerant fault isolation on a maintenance data computer. Embodiments also relate to computer-readable media, such as memory, flash chips, flash drives, hard disks, optical disks, magnetic disks, or any other type of computer-readable media capable of storing a computer program to perform latency tolerant fault isolation on a maintenance data computer.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A method of latency tolerant fault isolation, comprising:
receiving, by a maintenance data computer (102), evidence associated with a test failure;
accessing, by the maintenance data computer (102), metadata (214) to identify a system failure mode (306a, 306b, 306c, 306d, 306e, 306f, 306g, 306h, 306i) associated with the evidence and other potential evidence (302a, 302b, 302c, 302d, 302e, 302f, 302g) associated with the system failure mode;
**characterized by**
determining, by the maintenance data computer (102), a maximum predicted latency to receive the potential evidence associated with the system failure mode based on the metadata (214), wherein the maximum predicted latency is defined in a link of a bigraph dependency model (300), the link linking the potential evidence and the system failure mode;
waiting, by the maintenance data computer (102), up to the maximum predicted latency to determine whether one or more instances of the potential evidence associated with the system failure mode are received as additional evidence; and
diagnosing the system failure mode as a fault, by the maintenance data computer (102), based on the evidence and the additional evidence.

2. The method of claim 1, further comprising generating a maintenance work order based on diagnosing the fault.

3. The method of claim 1, further comprising:
reading the metadata from a non-volatile memory, wherein the metadata is formatted as one or more sparse matrices in the non-volatile memory; and
expanding the metadata into one or more full matrices comprising the evidence, the potential evidence, the system failure mode, a plurality of potential system failure modes, and a predicted latency associated with each of the instances of the potential evidence.

4. The method of claim 3, wherein the one or more full matrices are each a dependency model bigraph metadata model linking test failures of monitored subsystems as the evidence and the potential evidence to the system failure mode and the potential system failure modes with the predicted latency associated with each of the instances of the potential evidence providing a weighted link to determine the maximum predicted latency.

5. The method of claim 3, wherein the one or more full matrices are partitioned to isolate unrelated subsystems of the monitored subsystem from each other, the unrelated subsystems having no common evidence.

6. The method of claim 1, further comprising:
classifying the evidence as strong evidence based on determining that there is no potential evidence associated with the system failure mode based on the metadata;
classifying the evidence as weak evidence based on determining that there is potential evidence associated with the system failure mode based on the metadata; and
processing multiple instances of the strong evidence in parallel.

7. The method of claim 6, further comprising:
processing the weak evidence after processing any instances of the strong evidence; and
diagnosing the system failure mode as the fault prior to waiting for the maximum predicted latency upon receiving all of the potential evidence associated with the system failure mode.

8. A system (100) for latency tolerant fault isolation, comprising:
a plurality of monitored subsystems (104); and
a maintenance data computer (102) coupled to the monitored subsystems (104), the maintenance data computer (102) comprising a processing circuit (202) configured to:
receive evidence associated with a test failure;
access metadata (214) to identify a system failure mode (306a, 306b, 306c, 306d, 306e, 306f, 306g, 306h, 306i) associated with the evidence and other potential evidence (302a, 302b, 302c, 302d, 302e, 302f, 302g) associated with the system failure mode;
**characterized in that** the processing circuit (202) is further configured to:
determine a maximum predicted latency to receive the potential evidence associated with the system failure mode based on the metadata, wherein the maximum predicted latency is defined in a link of a bigraph dependency model (300), the link linking the potential evidence and the system failure mode;
wait up to the maximum predicted latency to determine whether one or more instances of the potential evidence associated with the system failure mode are received as additional evidence; and
diagnose the system failure mode as a fault based on the evidence and the additional evidence.

9. The system of claim 8, wherein the maintenance data computer is configured to generate a maintenance work order based on diagnosing the fault.

10. The system of claim 8, wherein the maintenance data computer further comprises a non-volatile memory, and the maintenance data computer is configured to:
read the metadata from the non-volatile memory, wherein the metadata is formatted as one or more sparse matrices in the non-volatile memory; and
expand the metadata into one or more full matrices comprising the evidence, the potential evidence, the system failure mode, a plurality of potential system failure modes, and a predicted latency associated with each of the instances of the potential evidence.

11. The system of claim 10, wherein the one or more full matrices are each a dependency model bigraph metadata model linking test failures of monitored subsystems as the evidence and the potential evidence to the system failure mode and the potential system failure modes with the predicted latency associated with each of the instances of the potential evidence providing a weighted link to determine the maximum predicted latency.

12. The system of claim 10, wherein the one or more full matrices are partitioned to isolate unrelated subsystems of the monitored subsystem from each other, the unrelated subsystems having no common evidence.

13. The system of claim 8, wherein the maintenance data computer is configured to:
classify the evidence as strong evidence based on determining that there is no potential evidence associated with the system failure mode based on the metadata;
classify the evidence as weak evidence based on determining that there is potential evidence associated with the system failure mode based on the metadata; and
process multiple instances of the strong evidence in parallel.

14. The system of claim 13, wherein the maintenance data computer is configured to:
process the weak evidence after processing any instances of the strong evidence; and
diagnose the system failure mode as the fault prior to waiting for the maximum predicted latency upon receiving all of the potential evidence associated with the system failure mode.

15. A non-transitory computer-readable medium, having stored thereon program code which, when executed, controls a maintenance data computer to perform a method according to any of claims 1-7.

## Patentansprüche

1. Verfahren zur latenztoleranten Fehlerisolierung, umfassend:
Empfangen, durch einen Wartungsdatencomputer (102), von mit einem Testausfall assoziierten Beweisen;
Zugreifen, durch den Wartungsdatencomputer (102), auf Metadaten (214) zum Feststellen eines Systemausfallmodus (306a, 306b, 306c, 306d, 306e, 306f, 306g, 306h, 306i), der mit den Beweisen und anderen mit dem Systemausfallmodus assoziierten möglichen Beweisen (302a, 302b, 302c, 302d, 302e, 302f, 302g) assoziiert ist;
**gekennzeichnet durch**
Bestimmen, durch den Wartungscomputer (102), einer maximalen vorhergesagten Latenz zum Empfangen der mit dem Systemausfallmodus assoziierten möglichen Beweise auf Grundlage der Metadaten (214), wobei die maximale vorhergesagte Latenz in einer Verbindung eines Bigraph-Abhängigkeitsmodells (300) definiert ist, wobei die Verbindung die möglichen Beweise und den Systemausfallmodus verbindet;
Abwarten, durch den Wartungsdatencomputer (102), bis zu der maximalen vorhergesagten Latenz zum Bestimmen, ob eine oder mehrere Instanzen der mit dem Systemausfallmodus assoziierten möglichen Beweise als zusätzliche Beweise empfangen werden; und
Diagnostizieren des Systemausfallmodus als ein Fehler, durch den Wartungsdatencomputer (102), auf Grundlage der Beweise und der zusätzlichen Beweise.

2. Verfahren nach Anspruch 1, ferner umfassend Erzeugen eines Wartungsauftrags auf Grundlage des Diagnostizierens des Fehlers.

3. Verfahren nach Anspruch 1, ferner umfassend:
Auslesen der Metadaten aus einem nicht flüchtigen Speicher, wobei die Metadaten als eine oder mehrere dünnbesetzte Matrizen in dem nicht flüchtigen Speicher formatiert sind; und Erweitern der Metadaten zu einer oder mehreren vollbesetzten Matrizen, die die Beweise, die möglichen Beweise, den Systemausfallmodus, eine Vielzahl von möglichen Systemausfallmodi und eine mit jeder der Instanzen der möglichen Beweise assoziierte vorhergesagte Latenz umfassen.

4. Verfahren nach Anspruch 3, wobei die eine oder mehreren vollbesetzten Matrizen jeweils ein Bigraph-Metadaten-Modell als Abhängigkeitsmodell sind, das Testausfälle von überwachten Teilsystemen als die Beweise und die möglichen Beweise mit dem Systemausfallmodus und den möglichen Systemausfallmodi verbindet, wobei die mit jeder der Instanzen der möglichen Beweise assoziierte vorhergesagte Latenz eine gewichtete Verbindung zum Bestimmen der maximalen vorhergesagten Latenz bereitstellt.

5. Verfahren nach Anspruch 3, wobei die eine oder mehreren vollbesetzten Matrizen partitioniert sind, um nicht zusammenhängende Teilsysteme des überwachten Teilsystems voneinander zu isolieren, wobei die nicht zusammenhängenden Teilsysteme keine gemeinsamen Beweise aufweisen.

6. Verfahren nach Anspruch 1, ferner umfassend:
Klassifizieren der Beweise als starke Beweise auf Grundlage davon, dass bestimmt wird, dass auf Grundlage der Metadaten keine mit dem Systemausfallmodus assoziierten möglichen Beweise vorliegen;
Klassifizieren der Beweise als schwache Beweise auf Grundlage davon, dass bestimmt wird, dass auf Grundlage der Metadaten mit dem Systemausfallmodus assoziierte mögliche Beweise vorliegen; und
paralleles Verarbeiten von mehreren Instanzen der starken Beweise.

7. Verfahren nach Anspruch 6, ferner umfassend:
Verarbeiten der schwachen Beweise nach dem Verarbeiten von jeglichen Instanzen der starken Beweise; und
Diagnostizieren des Systemausfallmodus als der Fehler vor dem Abwarten während der maximalen vorhergesagten Latenz nach dem Empfangen aller mit dem Systemausfallmodus assoziierten möglichen Beweise.

8. System (100) zur latenztoleranten Fehlerisolierung, umfassend:
eine Vielzahl von überwachten Teilsystemen (104); und
einen Wartungsdatencomputer (102), der an die überwachten Teilsysteme (104) gekoppelt ist, wobei der Wartungsdatencomputer (102) eine Verarbeitungsschaltung (202) umfasst, die zu Folgendem konfiguriert ist:
Empfangen von mit einem Testausfall assoziierten Beweisen;
Zugreifen auf Metadaten (214) zum Feststellen eines Systemausfallmodus (306a, 306b, 306c, 306d, 306e, 306f, 306g, 306h, 306i), der mit den Beweisen und anderen mit dem Systemausfallmodus assoziierten möglichen Beweisen (302a, 302b, 302c, 302d, 302e, 302f, 302g) assoziiert ist;
**dadurch gekennzeichnet, dass** die Verarbeitungsschaltung (202) ferner zu Folgendem konfiguriert ist:
Bestimmen einer maximalen vorhergesagten Latenz zum Empfangen der mit dem Systemausfallmodus assoziierten möglichen Beweise auf Grundlage der Metadaten, wobei die maximale vorhergesagte Latenz in einer Verbindung eines Bigraph-Abhängigkeitsmodells (300) definiert ist, wobei die Verbindung die möglichen Beweise und den Systemausfallmodus verbindet;
Abwarten bis zu der maximalen vorhergesagten Latenz zum Bestimmen, ob eine oder mehrere Instanzen der mit dem Systemausfallmodus assoziierten möglichen Beweise als zusätzliche Beweise empfangen werden; und
Diagnostizieren des Systemausfallmodus als ein Fehler auf Grundlage der Beweise und der zusätzlichen Beweise.

9. System nach Anspruch 8, wobei der Wartungsdatencomputer zum Erzeugen eines Wartungsauftrags auf Grundlage des Diagnostizierens des Fehlers konfiguriert ist.

10. System nach Anspruch 8, wobei der Wartungsdatencomputer ferner einen nicht flüchtigen Speicher umfasst und der Wartungsdatencomputer zu Folgendem konfiguriert ist:
Auslesen der Metadaten aus dem nicht flüchtigen Speicher, wobei die Metadaten als eine oder mehrere dünnbesetzte Matrizen in dem nicht flüchtigen Speicher formatiert sind; und
Erweitern der Metadaten zu einer oder mehreren vollbesetzten Matrizen, die die Beweise, die möglichen Beweise, den Systemausfallmodus, eine Vielzahl von möglichen Systemausfallmodi und eine mit jeder der Instanzen der möglichen Beweise assoziierte vorhergesagte Latenz umfassen.

11. System nach Anspruch 10, wobei die eine oder mehreren vollbesetzten Matrizen jeweils ein Bigraph-Metadaten-Modell als Abhängigkeitsmodell sind, das Testausfälle von überwachten Teilsystemen als die Beweise und die möglichen Beweise mit dem Systemausfallmodus und den möglichen Systemausfallmodi verbindet, wobei die mit jeder der Instanzen der möglichen Beweise assoziierte vorhergesagte Latenz eine gewichtete Verbindung zum Bestimmen der maximalen vorhergesagten Latenz bereitstellt.

12. System nach Anspruch 10, wobei die eine oder mehreren vollbesetzten Matrizen partitioniert sind, um nicht zusammenhängende Teilsysteme des überwachten Teilsystems voneinander zu isolieren, wobei die nicht zusammenhängenden Teilsysteme keine gemeinsamen Beweise aufweisen.

13. System nach Anspruch 8, wobei der Wartungsdatencomputer zu Folgendem konfiguriert ist:
Klassifizieren der Beweise als starke Beweise auf Grundlage davon, dass bestimmt wird, dass auf Grundlage der Metadaten keine mit dem Systemausfallmodus assoziierten möglichen Beweise vorliegen;
Klassifizieren der Beweise als schwache Beweise auf Grundlage davon, dass bestimmt wird, dass auf Grundlage der Metadaten mit dem Systemausfallmodus assoziierte mögliche Beweise vorliegen; und
paralleles Verarbeiten von mehreren Instanzen der starken Beweise.

14. System nach Anspruch 13, wobei der Wartungsdatencomputer zu Folgendem konfiguriert ist:
Verarbeiten der schwachen Beweise nach dem Verarbeiten von jeglichen Instanzen der starken Beweise; und
Diagnostizieren des Systemausfallmodus als der Fehler vor dem Abwarten während der maximalen vorhergesagten Latenz nach dem Empfangen aller mit dem Systemausfallmodus assoziierten möglichen Beweise.

15. Nicht flüchtiges computerlesbares Medium, auf dem Programmcode gespeichert ist, der bei Ausführung einen Wartungsdatencomputer steuert, um ein Verfahren nach einem der Ansprüche 1-7 durchzuführen.

## Revendications

1. Procédé de localisation de défaillances tolérant une latence, comprenant :
la réception, par un ordinateur de données de maintenance (102), de preuves associées à un échec de test ;
l'accès, par l'ordinateur de données de maintenance (102), à des métadonnées (214) pour identifier un mode de défaillance de système (306a, 306b, 306c, 306d, 306e, 306f, 306g, 306h, 306i) associé aux preuves et à d'autres preuves potentielles (302a , 302b, 302c, 302d, 302e, 302f, 302g) associées au mode de défaillance de système ;
**caractérisé par**
la détermination, par l'ordinateur de données de maintenance (102), d'une latence prédite maximale pour recevoir les preuves potentielles associées au mode de défaillance de système sur la base des métadonnées (214), dans lequel la latence prédite maximale est définie dans un lien d'un modèle de dépendance de bigraphe (300), le lien liant les preuves potentielles et le mode de défaillance de système ;
l'attente, par l'ordinateur de données de maintenance (102), jusqu'à la latence prédite maximale pour déterminer si une ou plusieurs instances des preuves potentielles associées au mode de défaillance de système sont reçues comme preuves supplémentaires ; et
le diagnostic du mode de défaillance de système comme une défaillance, par l'ordinateur de données de maintenance (102), sur la base des preuves et des preuves supplémentaires.

2. Procédé selon la revendication 1, comprenant en outre la génération d'un ordre de travail de maintenance sur la base du diagnostic de la défaillance.

3. Procédé selon la revendication 1, comprenant en outre :
la lecture des métadonnées à partir d'une mémoire non volatile, dans lequel les métadonnées sont formatées sous la forme d'une ou de plusieurs matrices creuses dans la mémoire non volatile ; et
l'extension des métadonnées en une ou en plusieurs matrices complètes comprenant les preuves, les preuves potentielles, le mode de défaillance de système, une pluralité de modes de défaillance potentielle de système, et une latence prédite associée à chacune des instances des preuves potentielles.

4. Procédé selon la revendication 3, dans lequel les une ou plusieurs matrices complètes sont chacune un modèle de métadonnées de bigraphe de modèle de dépendance liant les échecs de test des sous-systèmes surveillés comme les preuves et les preuves potentielles au mode de défaillance de système et les modes de défaillance potentielle de système avec la latence prédite associée à chacune des instances des preuves potentielles fournissant un lien pondéré pour déterminer la latence prédite maximale.

5. Procédé selon la revendication 3, dans lequel les une ou plusieurs matrices complètes sont partitionnées pour localiser les sous-systèmes non liés du sous-système surveillé les uns des autres, les sous-systèmes non liés n'ayant pas de preuves communes.

6. Procédé selon la revendication 1, comprenant en outre :
la classification des preuves comme preuves solides sur la base de la détermination du fait qu'il n'existe pas de preuves potentielles associées au mode de défaillance de système sur la base des métadonnées ;
la classification des preuves comme preuves faibles sur la base de la détermination du fait qu'il existe des preuves potentielles associées au mode de défaillance de système sur la base des métadonnées ; et
le traitement de plusieurs instances des preuves solides en parallèle.

7. Procédé selon la revendication 6, comprenant en outre :
le traitement des preuves faibles après le traitement de toutes instances des preuves solides ; et
le diagnostic du mode de défaillance de système comme la défaillance avant d'attendre la latence prédite maximale à la réception de toutes les preuves potentielles associées au mode de défaillance de système.

8. Système (100) de localisation de défaillances tolérant une latence, comprenant :
une pluralité de sous-systèmes surveillés (104) ; et
un ordinateur de données de maintenance (102) couplé aux sous-systèmes surveillés (104), l'ordinateur de données de maintenance (102) comprenant un circuit de traitement (202) configuré pour :
recevoir des preuves associées à un échec de test ;
accéder à des métadonnées (214) pour identifier un mode de défaillance de système (306a, 306b, 306c, 306d, 306e, 306f, 306g, 306h, 306i) associé aux preuves et à d'autres preuves potentielles (302a, 302b, 302c, 302d, 302e, 302f, 302g) associées au mode de défaillance de système ;
**caractérisé en ce que** le circuit de traitement (202) est en outre configuré pour :
déterminer une latence prédite maximale pour recevoir les preuves potentielles associées au mode de défaillance de système sur la base des métadonnées, dans lequel la latence prédite maximale est définie dans un lien d'un modèle de dépendance de bigraphe (300), le lien liant les preuves potentielles et le mode de défaillance de système ;
attendre jusqu'à la latence prédite maximale pour déterminer si une ou plusieurs instances des preuves potentielles associées au mode de défaillance de système sont reçues comme preuves supplémentaires ; et
diagnostiquer le mode de défaillance de système comme une défaillance sur la base des preuves et des preuves supplémentaires.

9. Système selon la revendication 8, dans lequel l'ordinateur de données de maintenance est configuré pour générer un ordre de travail de maintenance sur la base du diagnostic de la défaillance.

10. Système selon la revendication 8, dans lequel l'ordinateur de données de maintenance comprend en outre une mémoire non volatile, et l'ordinateur de données de maintenance est configuré pour :
lire les métadonnées à partir de la mémoire non volatile, dans lequel les métadonnées sont formatées sous la forme d'une ou de plusieurs matrices creuses dans la mémoire non volatile ; et
étendre les métadonnées en une ou en plusieurs matrices complètes comprenant les preuves, les preuves potentielles, le mode de défaillance de système, une pluralité de modes de défaillance potentielle de système, et une latence prédite associée à chacune des instances des preuves potentielles.

11. Système selon la revendication 10, dans lequel les une ou plusieurs matrices complètes sont chacune un modèle de métadonnées de bigraphe de modèle de dépendance liant les échecs de test des sous-systèmes surveillés comme preuves et preuves potentielles au mode de défaillance de système et aux modes de défaillance potentielle de système avec la latence prédite associée à chacune des instances des preuves potentielles fournissant un lien pondéré pour déterminer la latence prédite maximale.

12. Système selon la revendication 10, dans lequel les une ou plusieurs matrices complètes sont partitionnées pour localiser les sous-systèmes non liés du sous-système surveillé les uns des autres, les sous-systèmes non liés n'ayant pas de preuves communes.

13. Système selon la revendication 8, dans lequel l'ordinateur de données de maintenance est configuré pour :
classifier les preuves comme preuves solides sur la base de la détermination du fait qu'il n'existe pas de preuves potentielles associées au mode de défaillance de système sur la base des métadonnées ;
classifier les preuves comme preuves faibles sur la base de la détermination du fait qu'il existe des preuves potentielles associées au mode de défaillance de système sur la base des métadonnées ; et
traiter plusieurs instances des preuves solides en parallèle.

14. Système selon la revendication 13, dans lequel l'ordinateur de données de maintenance est configuré pour :
traiter les preuves faibles après le traitement de toutes instances des preuves solides ; et
diagnostiquer le mode de défaillance de système comme défaillance avant d'attendre la latence prédite maximale à la réception de toutes les preuves potentielles associées au mode de défaillance de système.

15. Support lisible par ordinateur non transitoire, sur lequel est stocké un code de programme qui, lorsqu'il est exécuté, commande un ordinateur de données de maintenance pour exécuter un procédé selon l'une quelconque des revendications 1 à 7.
